# EUROPEAN PATENT APPLICATION

(11) **EP 3 222 644 A1**
(43) Date of publication of application: **27.09.2017**
(21) Application number: 16773504.2
(22) Date of filing: 01.04.2016
(51) Int. Cl.: C08G 18/10, C08L 75/04, C08G 18/48, C08G 18/76, C08J 3/20

(54) **POLYURETHANE, PREPARING METHOD THEREFOR, AND USE THEREOF**

(30) Priority: 01.04.2015 KR 20150045948; 01.04.2015 KR 20150046075
(71) Applicant: Samyang Corporation, Seoul 03129 (KR)
(72) Inventor: RYU, Hoon, Daejeon 35235 (KR); YOO, Seung Hyun, Daejeon 34933 (KR); KIM, Han Na, Wanju-gun Jeollabuk-do 55365 (KR)
(74) Representative: Eder, Michael
(86) International application number: PCT/KR2016/003427
(87) International publication number: WO 2016/159723

(57) **Abstract**

The present invention relates to functional polyurethane, which can be widely used for the preparation of a foam, an elastomer, an adhesive, a coating material, a sealant, and the like, to a preparing method therefor, and to a use thereof.

## Description

### [TECHNICAL FIELD]

The present invention relates to functional polyurethane which can be widely used in preparation of foams, elastomers, adhesives, coating materials, sealants, etc., and its preparation method and use.

### [BACKGROUND ART]

At present, polyurethane has the advantage of easily adjusting its performance to its use suitably since the kinds of polyols and isocyanates, etc., used as raw materials are various. Thus, polyurethane is widely used in preparation of foams, elastomers, coating materials, sealants, fibers, etc.

The performance of polyurethane is understood to be realized through intermolecular hydrogen bonding of urethane group (-NH-(C=O)-O) which is formed by the reaction of hydroxyl group (-OH) of polyol and isocyanate group (-N=C=O) of isocyanate.

There are two processes for preparing polyurethane: a one-shot process wherein all raw materials are mixed together for the preparation, and a two-stage process wherein polyol and isocyanate are reacted first to prepare polyurethane prepolymer, and then the prepolymer is reacted with chain extender (for instance, Korean Patent No. 10-1431551 and Korean Laid-open Patent Publication No. 10-2013-0052578). In general, polyurethanes for foams are prepared by the one-shot process, whereas polyurethanes for elastomers, coating materials, sealants, adhesives, etc. are prepared by the two-stage process. The two-stage process has the advantage of controlling properties easily and conducting the molding process under a low-viscosity condition, as compared with the one-shot process. However, since the polyurethane prepolymer is two-component type which contains isocyanate group showing reactivity, there is a disadvantage wherein the storage stability must always be considered.

Recently, interest has been focused on the preparation of polymers using natural substances. This is because such natural substances can be alternatives for preparing against depletion of petrochemical raw materials and they can prevent global warming since they are carbon-neutral substances not emitting greenhouse gas, and an advantage is expected in biodegradability and biocompatibility.

Anhydrosugar alcohol, one of such natural substances, is a product obtained by dehydration reaction of sorbitol, mannitol, iditol, etc., and its examples include isosorbide, isomannide, isoidide, etc. Among anhydrosugar alcohols, in particular, isosorbide is of high value in terms of economic feasibility and availability.

### [CONTENTS OF THE INVENTION]

### [PROBLEMS TO BE SOLVED]

The present invention has an object of providing functional polyurethane, which shows remarkably increased mechanical properties such as tensile strength and restores itself if damaged-so-called self-healing property-and thus can increase durability of material, and its preparation method and use, by utilizing anhydrosugar alcohol which is a natural substance.

### [TECHNICAL MEANS]

The present invention provides polyurethane comprising: polyurethane prepolymer; and chain-extended part by anhydrosugar alcohol.

The present invention also provides a method for preparing a polyurethane, comprising: (1) a step of preparing polyurethane prepolymer; (2) a step of adding chain extender comprising anhydrosugar alcohol to said polyurethane prepolymer; and (3) a step of curing the resulting mixture of said step (2).

The present invention also provides a two-packaged composition comprising: a first component comprising polyol compound; and a second component comprising isocyanate compound, wherein one or more of said first and second components comprises anhydrosugar alcohol.

The present invention also provides a method of using polyurethane, comprising heating said polyurethane to a temperature between 100 and 200°C for use.

The present invention also provides a polyurethane composition which comprises said polyurethane and can be used at a temperature between 100 and 200°C.

### [EFFECT OF THE INVENTION]

The polyurethane provided according to the present invention shows remarkably increased mechanical properties such as tensile strength, and is eco-friendly since it is prepared by utilizing anhydrosugar alcohol which is a natural substance.

In addition, the polyurethane and its composition provided according to the present invention show good storage stability and low viscosity so as to facilitate its molding process and application, and when used according to the present invention, it shows self-healing property by which it restores itself, if damaged.

Furthermore, the polyurethane and its composition provided according to the present invention can be used in a low-temperature process at 200°C or lower, and so it can be used for low-melting-point materials (for example, plastic materials with a melting point of 200°C or lower) and can significantly improve durability of the materials.

### [BRIEF EXPLANATION OF THE DRAWINGS]

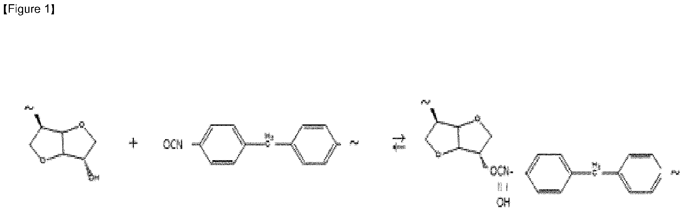

Figure 1 is a reaction scheme representing the reversibility of the urethane bonding formed between an anhydrosugar alcohol (isosorbide) and a diisocyanate compound (4,4'-methylene diphenyl diisocyanate, MDI).

### [CONCRETE MODE FOR CARRYING OUT THE INVENTION]

The present invention is explained in more detail below.

In the present invention, self-healable or self-healing property is the capability by which local damage generated from an external negative factor returns to its original shape through a controllable external positive factor, and it means that polyurethane becomes self-healed by using a thermal external positive factor.

In the present invention, the polyurethane prepolymer can be a reaction product of polyol and isocyanate. That is, for the polyurethane prepolymer, those prepared from polyol and isocyanate can be used.

For the polyol, conventional polyol compounds known in this field of art can be used without special limitation, and plural multifunctional polyol compounds can be used in a context of the present invention. Such polyols should not comprise additional group which is reactive with preferably NCO group, for example, reactive amino group. Compounds having plural OH groups can be those containing terminal OH group or those containing side OH group distributed along the chain. The OH group is a functional group which can react with isocyanate, and particularly, primary or secondary OH group. Polyol having 2 to 10 OH groups, preferably 2 to 6 OH groups, per molecule is suitable. A mixture of different polyols can be used as long as the average functionality is maintained. The molecular weight of the polyol can be from 500 to 10,000. An example of suitable polyol is polyol based on polyether, polyalkylene, polyester, polyurethane, polycarbonate or a combination thereof. More preferably, the polyol can be ether polyol (for example, poly(tetramethyleneether glycol), PTMEG), polycarbonate polyol, acrylated polyol, polyester polyol or a combination thereof. The polyol preferably exists in liquid form at room temperature (25°C), and in case of mixture, each of the polyols is a liquid at room temperature (25°C) independently.

The isocyanate contains preferably 2 to 5 NCO groups on average, and preferably 4 or fewer NCO groups. Suitable isocyanate is, for example, aromatic isocyanate such as 2,4- or 4,4'-methylene diphenyl diisocyanate (MDI), xylylene diisocyanate (XDI), m- or p-tetramethylxylylene diisocyanate (TMXDI), toluene diisocyanate (TDI), di- or tetra-alkyldiphenylmethane diisocyanate, 3,3'-dimethyldiphenyl-4,4'-diisocyanate (TODI), 1,3-phenylene diisocyanate, 1,4-phenylene diisocyanate, naphthalene diisocyanate (NDI), 4,4'-dibenzyldiisocyanate; aliphatic isocyanate such as hydrogenated MDI (H12MDI), 1-methyl-2,4-diisocyanatocyclohexane, 1,12-diisocyanatododecane, 1,6-diisocyanato-2,2,4-trimethylhexane, 1,6-diisocyanato-2,4,4-trimethylhexane, isophorone diisocyanate (IPDI), tetramethoxybutane-1,4-diisocyanate, butane-1,4-diisocyanate, hexane-1,6-diisocyanate (HDI), dimer fatty acid diisocyanate, dicyclohexylmethane diisocyanate, cyclohexane-1,4-diisocyanate, ethylene diisocyanate; or a combination thereof.

In the present invention, the anhydrosugar alcohol is used as a chain extender. As the anhydrosugar alcohol, specifically, isosorbide, isomannide, isoidide, or a derivative thereof or a combination thereof can be used, and preferably isosorbide is used.

In the present invention, the anhydrosugar alcohol can be used in an amount of preferably from 1 to 20 parts by weight, and more preferably from 2 to 15 parts by weight, based on 100 parts by weight of the polyurethane prepolymer.

According to an embodiment of the present invention, as well as the anhydrosugar alcohol, aliphatic glycol or polyhydric alcohol can be used additionally as the chain extender component. That is, the polyurethane of the present invention can further comprise chain-extended part by aliphatic glycol or polyhydric alcohol. As such an aliphatic glycol or polyhydric alcohol, specifically, aliphatic glycol or polyhydric alcohol having 2 to 10 carbons, particularly 2 to 6 carbons, can be used-for example, ethylene glycol, propanediol, 1,4-butanediol, 1,5-pentanediol, 1,6-hexanediol, 1,7-heptanediol, 1,8-octanediol, 1,10-decanediol, dimer fatty alcohol, glycerol, hexanetriol, trimethylolpropane, pentaerythritol or neopentyl alcohol-and preferably butanediol (BD) can be used.

In the present invention, as the use amount ratio of the polyurethane prepolymer and the chain extender (i.e., anhydrosugar alcohol and optionally further-used aliphatic glycol or polyhydric alcohol), the molar ratio of the isocyanate group of the polyurethane prepolymer to the hydroxyl group of the chain extender is preferably from 1:1.1 to 1:0.9, and more preferably from 1:1.05 to 1:0.95. In addition, the anhydrosugar alcohol is comprised in an amount of preferably 20% by weight or more (e.g., 20 to 100% by weight), and more preferably 50% or more (e.g., 50 to 100% by weight), in the total of 100% by weight of the chain extender. As the content of anhydrosugar alcohol in the total amount of the chain extender increases, reversible urethane bonding increases and thus the self-healing property of the polyurethane can be improved, and the mechanical properties such as modulus and tensile strength, etc. can be improved due to the increase of hard segment length and rigid bicyclic structure. Furthermore, if aliphatic glycol or polyhydric alcohol, particularly 1,4-butanediol, is used together with the anhydrosugar alcohol as the chain extender, it is possible not only to prepare polyurethane having improved mechanical properties and self-healing property, but also to improve the workability and storage stability since it can be prepared at room temperature in liquid form.

According to an embodiment of the present invention, the NCO content of a polyurethane prepolymer wherein both ends of PTMEG having molecular weight of 1000 are capped with monomeric MDI, is 5.6%, which means that 5.6 g (0.133 mol) of the isocyanate group is comprised in 100 g of the polyurethane prepolymer. To such a polyurethane prepolymer, the chain extender is added and reacted so that the molar ratio of the isocyanate group thereof to the hydroxyl group of the chain extender becomes from 1:1.1 to 1:0.9. For example, if only isosorbide is used as the chain extender, 14.6 g of isosorbide is added to 150.05 g of the polyurethane prepolymer.

The polyurethane of the present invention can be prepared by a method comprising: (1) a step of preparing polyurethane prepolymer; (2) a step of adding a chain extender comprising anhydrosugar alcohol to said polyurethane prepolymer; and (3) a step of curing the resulting mixture of said step (2).

In said step (1), the preparation of polyurethane prepolymer is conducted by reacting polyol and isocyanate as explained above.

Polyol having hydroxyl group has a property of absorbing moisture, and thus a process of drying moisture prior to the preparation of polyurethane prepolymer is required. The polyurethane prepolymer can be prepared by making a reactive macromolecular oligomer wherein isocyanates are located at both ends of a polyol. The reaction of polyol and isocyanate is conducted under nitrogen atmosphere in order to block moisture and side reactions. The reaction temperature is preferably maintained at 60 to 80°C, and attention should be paid to the temperature increase due to the exothermic reaction of hydroxyl group and isocyanate group. The reaction procedure can be confirmed through the titration of NCO content.

The chain extender used in said step (2) comprises anhydrosugar alcohol, and the amount thereof can be 20% or more (e.g., 20 to 100% by weight), and more preferably 50% or more (e.g., 50 to 100% by weight), in the total of 100% by weight of the chain extender. That is, as the chain extender component, anhydrosugar alcohol can be used alone, or a component other than anhydrosugar alcohol (for example, aliphatic glycol as explained above) can be used additionally. For chain extender component(s) having hydroxyl group, a process of drying moisture prior to use thereof is required. In the present invention, since a chain extender comprising anhydrosugar alcohol is used, the gel time can be prolonged and the bubbles generated during the preparation of polyurethane film can be removed easily.

In addition, it has been conventional to use blocking agents in order to resolve the storage stability problem of polyurethane raw materials, but they are vaporized and lost at high temperature. To the contrary, if anhydrosugar alcohol is used, there is an advantage of not losing it because it participates in the polymerization reaction.

In said step (3), the mixture of polyurethane prepolymer and chain extender obtained in said step (2) is heated and cured. The curing reaction can be conducted at a temperature of from 90 to 200°C, and more preferably from 100 to 130°C. There is no special limitation to the curing time, for example, the reaction can be conducted for 1 to 24 hours (more concretely, 2 to 18 hours).

The two-packaged composition of the present invention comprises a first component comprising polyol compound; and a second component comprising isocyanate compound, wherein one or more of said first and second components comprise anhydrosugar alcohol.

In the present invention, the two-packaged composition means a two-component type composition which can form polyurethane by mixing isocyanate compound and polyol compound.

The polyol compound, isocyanate compound and anhydrosugar alcohol used in the two-packaged composition of the present invention are the same as explained above, and one or more of said first and second components comprises anhydrosugar alcohol can further comprise a chain extender component other than anhydrosugar alcohol (for example, aliphatic glycol as explained above).

The two-packaged composition of the present invention can comprise an adjuvant(s). This can be understood as a substance(s) generally added in a small amount to modify the properties of the composition such as viscosity, wetting behavior, stability, reaction rate, bubble formation, shelf life or adhesion, and to adjust the characteristics in use according to the intended application. Examples of adjuvant can be selected from the group consisting of leveling agent, wetting agent, catalyst, anti-aging agent, coloring agent, drying agent, resin and wax.

The two-packaged composition of the present invention can comprise, as a curing promotor, a room-temperature curing promotor which exhibits the promoting performance mainly at room temperature, or a high-temperature curing promotor which exhibits the promoting performance mainly at high temperature. The total amount of the curing promotor is 5 to 20% by weight, based on the total weight of the composition. If the amount of the curing promotor is less than 5% by weight, the curing rate may decrease, and if the amount of the curing promotor is greater than 20% by weight, there may be a problem of viscosity lowering.

As the room-temperature curing promotor, metal salt compound or metal-naphthenic acid compound can be used. As the metal salt compound, potassium oleate, tetra-2-ethyl-hexyltitanate, Tin (IV) chloride, Iron (III) chloride, dibutyl tin dilaurate (DBTL), etc. can be used. As the metal-naphthenic acid compound, zinc-naphthenate (Zn-naphthenate), lead-naphthenate (Pb-naphthenate), cobalt-naphthenate (Co-naphthenate), calcium-naphthenate (Ca-naphthenate), etc. can be used.

As the high-temperature curing promotor, amine compound can be used. Examples of concrete amine compound may include trimethylamine (TEA), N,N-diethylcyclohexylamine, 2,6-dimethylmorphorine, triethylene diamine (DABCO), dimethylaminoethyl adipate, diethylethanolamine, N,N-dimethylbenzyl amine, 1,8-diazabicyclo[5.4.0]undec-7-ene (DBU), 1,5-diazabicyclo[4.3.0]non-5-ene (DBN), etc.

The coloring agent may be a color pigment or dye, and may be a metal oxide, complex oxide, metal sulfide or metal carbonate comprising one or more of iron, copper, manganese, cobalt, chrome, nickel, zinc, calcium and silver, or a pigment such as carbon black, titan black, organic black, graphite, etc. may be used. If necessary, the coloring agent may be used as a mixture of two or more.

The polyurethane of the present invention exhibits remarkably reinforced mechanical properties such as modulus and tensile strength, etc. because of the increase of hard segment length by anhydrosugar alcohol (e.g., isosorbide) and the rigid bicyclic structure that anhydrosugar alcohol has.

Preferably, the polyurethane of the present invention or a composition comprising the same can be used by heating it to a temperature between 100 and 200°C.

The polyurethane of the present invention, if heated to a temperature between 100 and 200°C, exhibits the self-healing property. According to embodiments of the present invention, the self-healable polyurethane can exhibit good self-healing property even if heated to a low temperature such as 140 to 200°C, or 150 to 200°C, or 180 to 200°C, and thus it can be used for low-melting-point materials, resulting in expansion of the application scope of polyurethane.

The urethane bonding, which is formed by the reaction of isocyanate of the polyurethane prepolymer and hydroxyl group of anhydrosugar alcohol, exhibits reversible characteristics upon heating to a temperature between 100 and 200°C, and this can be confirmed by using FT-IR. Concretely, if the reversible urethane bonding is heated, the reverse reaction proceeds to form isocyanate group and hydroxyl group, which is observed at the isocyanate absorption peak (2270 cm⁻¹) on FT-IR. Particularly, in the FT-IR analysis, the ratio of the isocyanate absorption peak (2270 cm⁻¹) to C-H absorption peak (2858 cm⁻¹) is an important value meaning that as it increases, the urethane bonding becomes more reversible, the viscosity becomes lower, the workability is improved, and the self-healing property is further developed. Blocking agent (for example, caprolactam) generally used for improving stability of isocyanate becomes deblocked at a temperature of 200°C or higher, and MDI shows activity. Whereas, it was confirmed that if anhydrosugar alcohol is used, the reversible reaction (deblocking) occurs even at a temperature of 180°C or lower. In addition, the blocking agent is generated in a vapor form and the workability deteriorates, and thus the vapor must be vented. Furthermore, in converting to the vapor form, unreacted loss is generated. Whereas, if anhydrosugar alcohol is used, the process can be conducted at a relatively low temperature and thus the application scope can be expanded.

In an embodiment, the polyurethane, which is obtained by using a reaction product of poly(tetramethyleneether glycol) and 4,4'-methylene diphenyl diisocyanate as the polyurethane prepolymer and isosorbide as the anhydrosugar alcohol, is preferably heated to a temperature between 150 and 200°C and used.

In an embodiment, the polyurethane, which is obtained by using a reaction product of poly(tetramethyleneether glycol) and isophorone diisocyanate as the polyurethane prepolymer and isosorbide as the anhydrosugar alcohol, is preferably heated to a temperature between 140 and 200°C and used.

In an embodiment, the polyurethane, which is obtained by using a reaction product of poly(tetramethyleneether glycol) and naphthalene diisocyanate as the polyurethane prepolymer and isosorbide as the anhydrosugar alcohol, is preferably heated to a temperature between 180 and 200°C and used.

The polyurethane composition comprising the polyurethane of the present invention can be used suitably, in particular, as a resin composition, powder coating, hot melt adhesive, etc. which is heated to a temperature between 100 and 200°C and applied or used. If the polyurethane of the present invention is applied to such a composition, the viscosity is low and thus the molding process is very easy, and the adhesion strength to the surface to be coated and the durability can be improved by the self-healing property due to the reversibility of urethane bonding.

In addition to said polyurethane, the polyurethane composition can further comprise additives (for example, stabilizer, etc.) which are conventionally added according to the use of the composition, and there is no special limitation to the kind and amount thereof.

Concretely, the stabilizer can be selected from the group consisting of antioxidant, UV stabilizer, carbon nanotube, gold nanoparticle and combinations thereof.

Furthermore, the polyurethane composition of the present invention can comprise an adjuvant(s) additionally. Such an adjuvant can be selected from the group consisting of leveling agent, wetting agent, catalyst, anti-aging agent, coloring agent, drying agent, resin and wax as explained above.

The polyurethane composition of the present invention can comprise, as a curing promotor, a room-temperature curing promotor or a high-temperature curing promotor as explained above. The total amount of the curing promotor is 5 to 20% by weight, based on the total weight of the composition. If the amount of the curing promotor is less than 5% by weight, the curing rate may decrease, and if the amount of the curing promotor is greater than 20% by weight, there may be a problem of viscosity lowering.

The present invention is explained in more detail through Examples and Comparative Examples below. However, the scope of the present invention is not limited thereby.

### [EXAMPLES]

### Example A1

100 g of dried poly(tetramethyleneether glycol) (PTMEG, Molecular weight: 1,000) and 50.05 g of 4,4'-methylene diphenyl diisocyanate (MDI) were mixed in a 4-necked reactor. The reaction was conducted under nitrogen atmosphere, maintained at 60°C, to obtain a polyurethane prepolymer having 5.6% of NCO. To the obtained polyurethane prepolymer, 14.6 g of isosorbide as chain extender was added, and the resulting mixture was incorporated into a coating-treated mold and cured at 110°C for 12 hours.

For the sample prepared as above, its modulus and tensile strength were measured by using a universe test machine, and the results are shown in Table 1 below.

### Examples A2 to A4

Excepting that isosorbide and butanediol (BD) were used together as chain extender according to the amount shown in Table 1 below, the polyurethane sample was prepared by the same method as that of Example A1, and its modulus and tensile strength were measured by the same method as that of Example A1. The results are shown in Table 1.

### Comparative Example A1

Excepting that butanediol (BD) was used as chain extender according to the amount shown in Table 1 below, the polyurethane sample was prepared by the same method as that of Example A1, and its modulus and tensile strength were measured by the same method as that of Example A1. The results are shown in Table 1.

### Comparative Example A2

The same kinds and amounts of reactants as those of Example A2 were used, but poly(tetramethyleneether glycol) (PTMEG), isosorbide and butanediol (BD) were mixed in a 4-necked reactor, 4,4'-methylene diphenyl diisocyanate (MDI)-which is a solid at room temperature-was heated in a separate vessel to 70°C, and added to said 4-necked reactor and mixed. The resulting mixture was incorporated into a coating-treated mold and cured at 110°C for 12 hours to prepare the polyurethane sample. Its modulus and tensile strength were measured by the same method as that of Example A1. The results are shown in Table 1.

**[Table 1]**

| | | Example | | | | Comparative Example | |
|---|---|---|---|---|---|---|---|
| | | A1 | A2 | A3 | A4 | A1 | A2 |
| Composition (g) | PTMEG | 100 | 100 | 100 | 100 | 100 | 100 |
| | MDI | 50.05 | 50.05 | 50.05 | 50.05 | 50.05 | 50.05 |
| | Isosorbide | 14.6 | 8.6 | 5.3 | 2.0 | - | 8.6 |
| | BD | - | 3.7 | 5.3 | 7.8 | 9.0 | 3.7 |
| Properties | 100% Modulus (MPa) | 60 | 55 | 50 | 44 | 39 | 35.4 |
| | Tensile strength (MPa) | 47.7 | 42.2 | 41.6 | 37.9 | 33.1 | 36.2 |

From the results of Table 1, it can be known that in a method for preparing a polyurethane elastomer by a two-stage process, Example A1 using isosorbide as chain extender and Examples A2 to A4 using a mixture of isosorbide and butanediol as chain extender provide a large increase of initial elasticity rate and tensile strength. In particular, it should be noted that such a large increase of tensile strength is a high performance which is hard to realize in conventional polyurethane elastomers using MDI. However, it can be known that in Comparative Example A1 using butanediol alone as chain extender and preparing polyurethane by a two-stage process, the initial elasticity rate and tensile strength are quite inferior. Furthermore, it can be known that in Comparative Example A2 using a mixture of isosorbide and butanediol as chain extender but preparing polyurethane by a one-shot process, the initial elasticity rate and tensile strength are quite inferior.

### Example B1

100 g of dried poly(tetramethyleneether glycol) (PTMEG, Molecular weight: 1000) and 50.05 g of 4,4'-methylene diphenyl diisocyanate (MDI) were mixed in a 4-necked reactor. The reaction was conducted under nitrogen atmosphere, maintained at 60°C, to obtain a polyurethane prepolymer having 5.6% of NCO. To the obtained polyurethane prepolymer, 14.6 g of isosorbide as chain extender was added, and the resulting mixture was incorporated into a coating-treated mold and cured at 110°C for 12 hours.

The cured sample was heated according to the temperature conditions shown in Table 2 below, and analyzed with FT-IR. The ratio of isocyanate absorption peak (I2270, 2270 cm⁻¹) to C-H absorption peak (I2858, 2858 cm⁻¹) was calculated, and the results are shown in Table 2 below.

### Example B2

Excepting that 44.46 g of isophorone diisocyanate (IPDI) was used as polyisocyanate instead of MDI, the cured sample was prepared by the same method as that of Example B1, and it was analyzed with FT-IR with heating according to the temperature conditions by the same method as that of Example B1. The results are shown in Table 2.

### Example B3

Excepting that 42.04 g of naphthalene diisocyanate (NDI) was used as polyisocyanate instead of MDI, the cured sample was prepared by the same method as that of Example B1, and it was analyzed with FT-IR with heating according to the temperature conditions by the same method as that of Example B1. The results are shown in Table 2.

### Example B4

Excepting that a mixture of 8.6 g of isosorbide and 3.7 g of butanediol (BD) was used instead of 14.6 g of isosorbide, the cured sample was prepared by the same method as that of Example B1, and it was analyzed with FT-IR with heating according to the temperature conditions by the same method as that of Example B1. The results are shown in Table 2.

### Example B5

Excepting that a mixture of 5.3 g of isosorbide and 5.3 g of butanediol (BD) was used instead of 14.6 g of isosorbide, the cured sample was prepared by the same method as that of Example B1, and it was analyzed with FT-IR with heating according to the temperature conditions by the same method as that of Example B1. The results are shown in Table 2.

### Example B6

Excepting that a mixture of 2.0 g of isosorbide and 7.8 g of butanediol (BD) was used instead of 14.6 g of isosorbide, the cured sample was prepared by the same method as that of Example B1, and it was analyzed with FT-IR with heating according to the temperature conditions by the same method as that of Example B1. The results are shown in Table 2.

**[Table 2] (Ratio of I2270/I2858)**

| Heating temperature (°C) | Example B1 | Example B2 | Example B3 | Example B4 | Example B5 | Example B6 |
|---|---|---|---|---|---|---|
| 100 | 0.00254 | 0.02633 | 0.05185 | 0.00174 | 0.00367 | 0.00250 |
| 110 | 0.00536 | 0.02499 | 0.04766 | 0.00224 | 0.00456 | 0.00278 |
| 120 | 0.00622 | 0.02543 | 0.04794 | 0.00169 | 0.00450 | 0.00287 |
| 130 | 0.00406 | 0.02392 | 0.04605 | 0.00213 | 0.00455 | 0.00290 |
| 140 | 0.00451 | 0.02967 | 0.04589 | 0.00291 | 0.00864 | 0.00284 |
| 150 | 0.01027 | 0.03055 | 0.04638 | 0.00341 | 0.01117 | 0.00295 |
| 160 | 0.00736 | 0.03574 | 0.04722 | 0.00577 | 0.01194 | 0.00298 |
| 170 | 0.01286 | 0.03655 | 0.04872 | 0.00970 | 0.01474 | 0.00310 |
| 180 | 0.02511 | 0.03737 | 0.05897 | 0.02971 | 0.01935 | 0.00350 |
| 190 | 0.03323 | 0.04142 | 0.08233 | 0.02971 | 0.02740 | 0.00347 |
| 200 | 0.03764 | 0.04691 | 0.14271 | 0.04170 | 0.03595 | 0.00368 |

From the results of Table 2, it can be known that the polyurethane samples prepared in Examples B1 to B6 have reversible urethane bonding, and thus exhibit the self-healing property. More concretely, the characteristics of the reversible urethane bonding was greatly improved in the heating temperature range of 150 to 200°C in Example B1, 140 to 200°C in Example B2, 180 to 200°C in Example B3, 160 to 200°C in Example B4, 140 to 200°C in Example B5, and 170 to 200°C in Example B6.

### Comparative Example B1

Excepting that 9.0 g of butanediol (BD) was used instead of isosorbide, the sample was prepared by the same method as that of Example B1 with curing at 120°C which is a conventional curing temperature of BD. However, the polyurethane sample prepared in Comparative Example B1 showed no reversible reaction at the temperature range of 100 to 200°C, and thus the sample had no substantial flowability, the activity of isocyanate could not be confirmed, and as a result, there was no self-healing property due to the reversible reaction.

## Claims

1. Polyurethane comprising:
polyurethane prepolymer; and
chain-extended part by anhydrosugar alcohol.

2. The polyurethane according to claim 1, wherein the polyurethane prepolymer is a reaction product of polyol and isocyanate.

3. The polyurethane according to claim 2, wherein the polyol is polyol based on polyether, polyalkylene, polyester, polyurethane, polycarbonate or a combination thereof.

4. The polyurethane according to claim 2, wherein the polyol is ether polyol, polycarbonate polyol, acrylated polyol, polyester polyol or a combination thereof.

5. The polyurethane according to claim 2, wherein the isocyanate is 2,4- or 4,4'-methylene diphenyl diisocyanate (MDI), xylylene diisocyanate (XDI), m- or p-tetramethylxylylene diisocyanate (TMXDI), toluene diisocyanate (TDI), di- or tetra-alkyldiphenylmethane diisocyanate, 3,3'-dimethyldiphenyl-4,4'-diisocyanate (TODI), 1,3-phenylene diisocyanate, 1,4-phenylene diisocyanate, naphthalene diisocyanate (NDI), 4,4'-dibenzyldiisocyanate, hydrogenated MDI (H12MDI), 1-methyl-2,4-diisocyanatocyclohexane, 1,12-diisocyanatododecane, 1,6-diisocyanato-2,2,4-trimethylhexane, 1,6-diisocyanato-2,4,4-trimethylhexane, isophorone diisocyanate (IPDI), tetramethoxybutane-1,4-diisocyanate, butane-1,4-diisocyanate, hexane-1,6-diisocyanate (HDI), dimer fatty acid diisocyanate, dicyclohexylmethane diisocyanate, cyclohexane-1,4-diisocyanate, ethylene diisocyanate or a combination thereof.

6. The polyurethane according to claim 2, wherein the isocyanate is 4,4'-methylene diphenyl diisocyanate, toluene diisocyanate, isophorone diisocyanate, naphthalene diisocyanate or a combination thereof.

7. The polyurethane according to claim 1, wherein the anhydrosugar alcohol is isosorbide, isomannide, isoidide, or a derivative thereof or a combination thereof.

8. The polyurethane according to claim 1, wherein the polyurethane prepolymer is prepared from poly(tetramethyleneether glycol) and 4,4'-methylene diphenyl diisocyanate, and the anhydrosugar alcohol is isosorbide.

9. The polyurethane according to claim 1, further comprising chain-extended part by aliphatic glycol or polyhydric alcohol.

10. The polyurethane according to claim 9, wherein the aliphatic glycol or polyhydric alcohol is aliphatic glycol or polyhydric alcohol having 2 to 10 carbons.

11. The polyurethane according to claim 9, wherein the aliphatic glycol or polyhydric alcohol is ethylene glycol, propanediol, 1,4-butanediol, 1,5-pentanediol, 1,6-hexanediol, 1,7-heptanediol, 1,8-octanediol, 1,10-decanediol, dimer fatty alcohol, glycerol, hexanetriol, trimethylolpropane, pentaerythritol or neopentyl alcohol.

12. The polyurethane according to claim 1, which is obtained by curing a mixture comprising polyurethane prepolymer and anhydrosugar alcohol.

13. The polyurethane according to claim 12, wherein the curing reaction of the mixture comprising polyurethane prepolymer and anhydrosugar alcohol is conducted at a temperature of from 90 to 200°C.

14. A method for preparing a polyurethane, comprising:
(1) a step of preparing polyurethane prepolymer;
(2) a step of adding a chain extender comprising anhydrosugar alcohol to said polyurethane prepolymer; and
(3) a step of curing the resulting mixture of said step (2).

15. The method for preparing a polyurethane according to claim 14, wherein the preparation of polyurethane prepolymer in said step (1) is conducted by reacting polyol and isocyanate.

16. The method for preparing a polyurethane according to claim 14, wherein the anhydrosugar alcohol is comprised in an amount of 20% by weight or more in the total of 100 % by weight of the chain extender used in said step (2).

17. The method for preparing a polyurethane according to claim 14, wherein the curing reaction in said step (3) is conducted at a temperature of from 90 to 200°C.

18. A two-packaged composition comprising: a first component comprising polyol compound; and a second component comprising isocyanate compound, wherein one or more of said first and second components comprises anhydrosugar alcohol.

19. The two-packaged composition according to claim 18, further comprising one or more adjuvants selected from the group consisting of leveling agent, wetting agent, catalyst, anti-aging agent, coloring agent, drying agent, resin and wax.

20. The two-packaged composition according to claim 18, further comprising a curing promotor.

21. The two-packaged composition according to claim 19, wherein the coloring agent is a color pigment or dye.

22. A method of using polyurethane, comprising heating the polyurethane of any of claims 1 to 13 to a temperature between 100 and 200°C for use.

23. The method of using polyurethane according to claim 22, wherein the polyurethane prepolymer is a reaction product of poly(tetramethyleneether glycol) and 4,4'-methylene diphenyl diisocyanate and the anhydrosugar alcohol is isosorbide, and the temperature of heating polyurethane is between 150 and 200°C.

24. The method of using polyurethane according to claim 22, wherein the polyurethane prepolymer is a reaction product of poly(tetramethyleneether glycol) and isophorone diisocyanate and the anhydrosugar alcohol is isosorbide, and the temperature of heating polyurethane is between 140 and 200°C.

25. The method of using polyurethane according to claim 22, wherein the polyurethane prepolymer is a reaction product of poly(tetramethyleneether glycol) and naphthalene diisocyanate and the anhydrosugar alcohol is isosorbide, and the temperature of heating polyurethane is between 180 and 200°C.

26. A polyurethane composition which comprises the polyurethane of any of claims 1 to 13 and can be used at a temperature between 100 and 200°C.

27. The polyurethane composition according to claim 26, which is a resin composition, powder coating or hot melt adhesive.

28. The polyurethane composition according to claim 26, further comprising one or more stabilizers selected from the group consisting of antioxidant, UV stabilizer, carbon nanotube, gold nanoparticle and combinations thereof.

29. The polyurethane composition according to claim 26, further comprising one or more adjuvants selected from the group consisting of leveling agent, wetting agent, catalyst, anti-aging agent, coloring agent, drying agent, resin and wax.

30. The polyurethane composition according to claim 26, further comprising a curing promotor.

31. The polyurethane composition according to claim 29, wherein the coloring agent is a color pigment or dye.
